(19) Europäisches Patentamt
European Patent Office
Office européen des brevets

(11) **EP 4 488 049 A1**

(12) **EUROPEAN PATENT APPLICATION**
published in accordance with Art. 153(4) EPC

(43) Date of publication:
**08.01.2025 Bulletin 2025/02**

(21) Application number: 23763591.7

(22) Date of filing: **03.03.2023**

(51) International Patent Classification (IPC):
**B32B 3/12** (2006.01)    **B29C 70/18** (2006.01)
**B32B 5/28** (2006.01)    **B64C 1/00** (2006.01)
**B64G 1/22** (2006.01)

(52) Cooperative Patent Classification (CPC):
**B29C 70/18; B32B 3/12; B32B 5/28;** B64C 1/00;
B64G 1/22

(86) International application number:
**PCT/JP2023/008190**

(87) International publication number:
**WO 2023/167334 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.03.2022  JP 2022032416**
**03.03.2022  JP 2022032417**

(71) Applicant: **Toray Industries, Inc.**
**Tokyo 103-8666 (JP)**

(72) Inventors:
• **ARAI, Atsuhito**
**Otsu-shi, Shiga 520-8558 (JP)**
• **HONMA, Masato**
**Iyo-gun, Ehime 791-3193 (JP)**
• **FUJIOKA, Takashi**
**Iyo-gun, Ehime 791-3193 (JP)**

(74) Representative: **Kador & Partner Part mbB**
**Corneliusstraße 15**
**80469 München (DE)**

(54) **CORE MATERIAL, SKIN-CORE STRUCTURE, SPACE EQUIPMENT, FLYING BODY, AND METHOD FOR MANUFACTURING SKIN-CORE STRUCTURE**

(57)    The present invention relates to a core material that is air-permeable and compatibly satisfies both weight reduction and mechanical properties, and to a skin-core structural body using the same. The core material according to the present invention has a structure including a collective body of hollow columnar cells compartmentally formed by a cell wall, in which the cell wall includes a fiber-reinforced composite material including a fiber (Cf) and a resin (Cr), and at least a part of it is a porous structural portion composed of an aggregate including the resin (Cr) and the fiber (Cf).

FIG.1

Processed by Luminess, 75001 PARIS (FR)

EP 4 488 049 A1

## Description

Field

The present invention relates to a core material used in a skin-core structural body.

Background

A skin-core structural body using a core material, as a core, that has a structure composed of a collective body of hollow columnar cells divided by cell walls is widely used in a structural member, a construction material, and the like in an aircraft, a marine ship, and so forth, because of its lightweight and excellent mechanical properties such as a high rigidity. Illustrative examples of the core material include an aluminum honeycomb core formed of aluminum foil and a FRP honeycomb core formed of reinforcing fibers and a matrix resin. Among these, in an aircraft and other flying objects, where weight reduction is strongly demanded, an aramid honeycomb core that is formed of a nonwoven cloth of aramid fibers impregnated with a phenol resin is mainly used.

In the core material, it is often required to have an air permeability, in addition to a lightweight and good mechanical properties. For example, when a skin material is bonded to form a sandwich structural body, occurrence of gases such as a volatile component and an absorbed moisture generated from the material may cause a molding defect due to a gas pressure, so it is necessary to evacuate the gases from each cell space to the outside. When used for space equipment such as a satellite, an internal pressure of each cell space needs to match the external pressure (zero atm in the outer space). Moreover, when used in a flying object such as an airplane, repeated flights and a change in an atmospheric pressure may cause a moisture in the air to penetrate, resulting in the condensation of the moisture locally. The moisture in the core material freezes during a flight at a high altitude, and the volume expansion during the freezing process may cause delamination of the bonding between the core material and the skin material.

In order to provide the core material with an air permeability, the method in which a number of holes are drilled in the cell wall (Patent Literature 1) and the method in which a notched structure is formed in an open end portion of the cell wall (Patent Literature 2) have been attempted.

Citation List

Patent Literature

Patent Literature 1: Japanese Patent No. 6804340
Patent Literature 2: Japanese Patent No. 6549982 Summary

Technical Problem

According to the methods described in Patent Literatures 1 and 2, although the core material having an air permeability may be obtained, there are concerns about a decrease in reliability as the structural body, such as a decrease in the strength of the core material due to the drilling in the cell wall and a decrease in the bonding property with the skin material due to the notched structure at the open end portion. In addition, in the case where a fiber-reinforced plastic is used as the matrix, the reinforcing fiber base material and the resin having different hardness are combined, so that, for example, the drilling process itself is unstable, and in addition, especially drilling through the inner cell wall is difficult. Therefore, there have been problems from the viewpoint of the processing workability. An object of the present invention is to provide a core material that is provided with an air permeability and both weight reduction and good mechanical properties compatibly.

Solution to Problem

The present invention to solve the problem described above is a core material having a structure including a collective body (Array) of hollow columnar cells compartmentally formed by a cell wall. The cell wall includes a fiber-reinforced composite material including a fiber (Cf) and a resin (Cr), and at least a part of the cell wall is a porous structural portion composed of an aggregate of the fiber (Cf) covered by the resin (Cr).

According to other aspect of the present invention, provided is a skin-core structural body formed by bonding the above-mentioned core material to a skin material. Advantageous Effects of Invention

According to the present invention, provided are a core material and a skin-core structural body that compatibly satisfy both weight reduction and mechanical properties at high levels, in addition to being provided with an air permeability.

Brief Description of Drawings

FIG. 1 is a schematic diagram illustrating one embodiment of a core material according to the present invention.

FIG. 2 is a schematic diagram illustrating one embodiment of a sandwich structural body according to the present invention.

FIG. 3 is a schematic diagram illustrating one embodiment of a fiber mat (A) contained in a sheet base material (B).

FIG. 4 is an enlarged schematic diagram of a porous structural portion of a cell wall in one embodiment of the core material according to the present invention.

FIG. 5 is a schematic diagram illustrating one example of production equipment of the fiber mat (A).

FIG. 6 is a cross-sectional view of a stacking and molding state in the evaluation of a buckling resistance of the core material according to the present invention.

FIG. 7 is a schematic diagram viewed from above of the sandwich structural body before molding in evaluation of a buckling resistance of the core material according to the present invention.

FIG. 8 is a schematic diagram viewed from above of the sandwich structural body in which a core crush occurred after molding in the evaluation of the buckling resistance of the core material according to the present invention.

FIG. 9 is a schematic perspective diagram illustrating the buckling of the core material after molding.

FIG. 10 is a schematic diagram illustrating the state how a part of discontinuous fibers (Cf) contained in the cell wall of the core material penetrates into a skin material.

FIG. 11 is a schematic diagram illustrating an average fiber orientation angle in an out-of-plane direction relative to the cell wall according to the present invention.

Description of Embodiments

<Core Material>

Hereinafter, a core material according to the present invention will be described while referring to the drawings as appropriate, but the present invention is not limited to these drawings. However, as it is readily understood by a person ordinarily skilled in the art, the description of the embodiments illustrated in the drawings may also serve as the description of the core material according to the present invention as a superordinate concept.

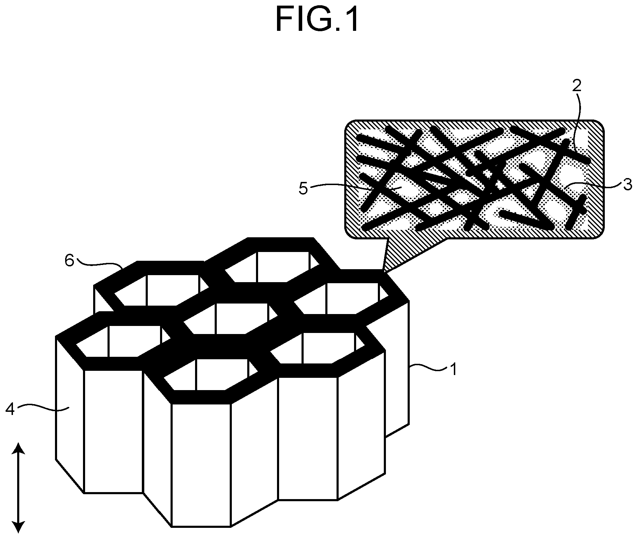

FIG. 1 is a schematic diagram illustrating one embodiment of the core material according to the present invention, together with an enlarged image of a porous structural portion. A core material 1 has the structure composed of a collective body of a number of hollow columnar cells (hereinafter this is sometimes referred to as "columnar cells"), which are compartmentally formed by a cell wall 4. The cell wall 4 is formed of a fiber-reinforced composite material containing a fiber (Cf) and a resin (Cr), and the end portion of the columnar cell in the axial direction (arrow direction in FIG. 1) is a porous structural portion 6. And, as illustrated in the enlarged view in FIG. 1, the porous structural portion 6 is composed of a collective body of fibers (Cf) 2 covered by a resin (Cr) 3.

From the viewpoints of a shape stability, an ease of thickness control, and a degree of freedom of the porous structural portion 6, the covering state of the fiber (Cf) 2 by the resin (Cr) 3 is satisfactory as long as at least the intersection point between monofilaments of the fiber (Cf) 2 that constitutes the porous structural portion 6 is covered. A more preferable aspect is that the resin (Cr) 3 covers the surroundings of the fiber (Cf) 2 with a thickness of 1 um or more of the resin (Cr) 3. This state means that the surface of the fiber (Cf) 2 is not exposed owing to the resin (Cr) 3, in other words, the fiber (Cf) 2 has an electric wire-like film formed of the resin (Cr) 3. This ensures that the porous structural portion 6 has a higher shape stability and expresses sufficient mechanical properties.

It is preferable that the porous structural portion 6 contains a void 5 as the space that is formed by overlapping or intersecting columnar supports of the fibers (Cf) 2 covered by the resin (Cr) 3. The structure described above allows the porous structural portion 6 to have the air permeability and to exhibit high strength and elastic modulus owing to the reinforcing effect of the fiber (Cf) 2. It is preferable that the porous structural portion 6 has also at least a continuous pore in the thickness direction of the cell wall. The structure like this allows to easily ensure the air permeability in the thickness direction of the cell wall.

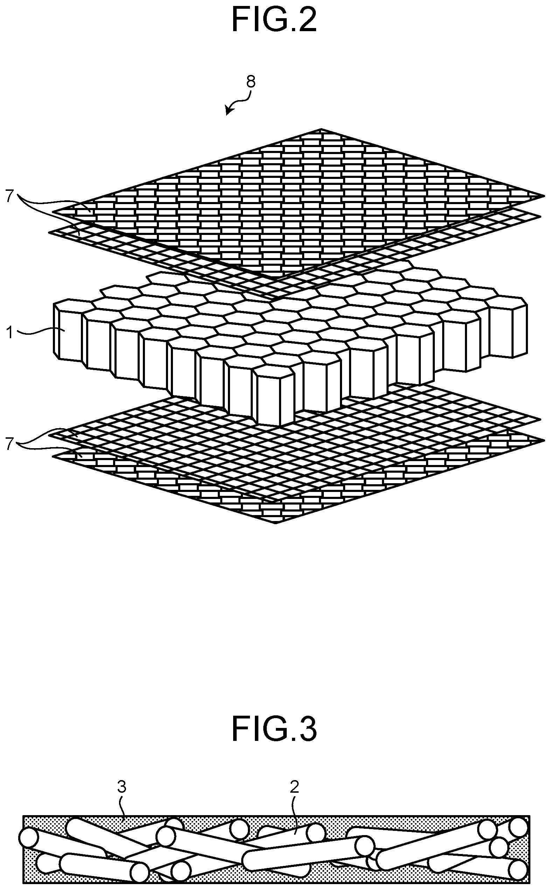

There is no particular restriction on the core material according to the present invention. This is typically used as a skin-core structural body having a skin material bonded to at least one side, preferably both sides, of the end surface where the columnar cell opens (core open surface). Hereinafter, in this specification, the structural body in which the skin material is bonded to both sides of the core material, which is an especially preferable aspect among the skin-core structural bodies, is referred to as a sandwich structural body. FIG. 2 is a schematic diagram illustrating one embodiment of the sandwich structural body mentioned above. In FIG. 2, the core material 1 and a skin material 7 are depicted separately to clarify the structure of a skin-core structural body 8. The sandwich structural body 8 is composed of the skin material 7 bonded to the open end surface of the core material 1. An adhesive may be used between the core material 1 and the skin material 7.

The porous structural portion of the cell wall may be a part of the cell wall, or the entire cell wall may be the porous structural portion; nevertheless, it is preferable to have the porous structural portion at least near the open end portion of the hollow columnar cell because this embodiment increases the contact area with the skin material thereby expressing a high bonding strength. Due to its structure, the core material has a small contact area with the skin material, which makes it difficult to obtain a strong bonding strength. To obtain a high bonding strength, among other things, it is necessary to control the fluidity of the adhesive and of the resin of the skin material so as to form a resin pool called a fillet, which makes it possible to bond using the side of the cell wall as well. The core material according to the present invention has the porous structural portion near the open end portion, i.e., near the portion that contacts the skin material when bonded to the skin material, so that the thickness of the cell wall may be increased while maintaining the mass and strength thereof, resulting in the increase in the contact area with the skin material and expressing a high bonding strength. In addition, this allows a part of the adhesive or of the resin of the skin material to flow into the porous structural portion of the core material, making the bonding between the skin material and the core material even stronger. To achieve a high bonding strength between the core material and the skin material, the area ratio occupied by the cell wall (bonding area ratio) in the area of the core open surface per unit core density is preferably 0.075%·m$^3$/kg or more, and more preferably 0.100%·m$^3$/kg or more. When the area ratio per unit core density occupied by the cell wall is less than 0.075%·m$^3$/kg, the bonding area where the cell wall and the skin material come into contact is small, resulting in a decrease in the bonding strength between the core material and the skin material. When the ratio of the cell wall is high, this causes an increase in the mass and the core density, resulting in poor weight reduction. The bond strength between the core material and the skin material is expressed by the climbing drum peel strength (ASTM D1781-2004) .

It is also preferable that the thickness of the cell wall near the open end portion is more than the central portion of the cell wall, because this allows to increase the bonding area to the skin material. At this time, when the thickness of the cell wall near the open end portion is increased by changing the degree of expansion of the porous structure, it is possible to form the structure near the open end portion that contains more voids than at the central portion, which facilitates the flow of the resin and adhesive that make up the skin material when bonding to the skin material, thereby increasing the bonding strength. The ratio of the thickness of the thickest part of the cell wall (Da) to the thickness of the thinnest part (Db) of the cell wall in the core material, i.e., Da/Db, is preferably in the range of 1.2 to 10. The relatively thick portion in the cell wall is typically the porous structural portion described above. When this portion is too thin, formation of the porous structure may be insufficient to provide the air permeability. On the other hand, when the porous structural body is excessively formed, resulting in an excessively thick cell wall, the compartmentalized hollow columnar structure may collapse, resulting in the decrease in the strength thereof. The Da/Db is preferably in the range of 1.2 to 10, and more preferably in the range of 1.5 to 5.

In addition, making the entire cell wall a porous structural portion is desirable because it not only realizes a high boding strength to the skin material but also improves the air permeability as well as the buckling resistance and impact resistance of the cell wall. In general, because the cell wall of the core material is thin and vulnerable to a load that is applied in the perpendicular direction to the axial direction of the cell wall, so that, for example, at the time during the bonding of the skin material, a phenomenon called a core crush may occur in which the cell wall buckles as the skin material slips. To prevent the cell wall from buckling, usually, it is considered to reduce the cell size or to increase the thickness of the cell wall, but these methods inevitably result in an increase in the mass thereof. In the present invention, by making the entire cell wall the porous structural portion, both the weight reduction and the high buckling resistance may be realized compatibly. In addition, the porous structural portion absorbs an impact energy by the sequential fracture thereof against impact, so that an excellent impact resistance may be obtained.

In order that the core material expresses a high buckling resistance, a high elastic modulus is required. The elastic modulus of the core material is preferably 1 GPa or more at room temperature (20°C±15°C), and more preferably 1 GPa or more at 120 to 200°C, which is the general molding temperature of the skin-core structural body. The elastic modulus is the storage modulus of the skin-core structural body measured by the dynamic mechanical analysis (DMA) using DMA Q800 (manufactured by TA Instruments Inc.) at room temperature or at the molding temperature (120 to 200°C) at a temperature rising rate of 5°C/minute, in which a cell wall is taken from the core material, and the thickness direction of the core material (direction to the cell wall axis) is set as the longitudinal direction of the specimen, and the DMA measurement is conducted under a single cantilever mode at a frequency of 1 Hz.

The density of the cell wall expressed by Wc, the mass per unit volume, is preferably 0.1 g/cm$^3$ or more and 1.3 g/cm$^3$ or less, and more preferably 0.3 g/cm$^3$ or more and 1.0 g/cm$^3$ or less. When the density is below this range, the mechanical properties may be deteriorated, and when the density is above this range, the weight reduction effect and the air permeability may be insufficient. Here, Wc is the value obtained by dividing the mass [g] of the sample from which only the cell wall is cut out from the core material by the volume [cm$^3$] determined from the sample shape, and is the arithmetic average value of the specific gravities measured on 5 randomly chosen samples.

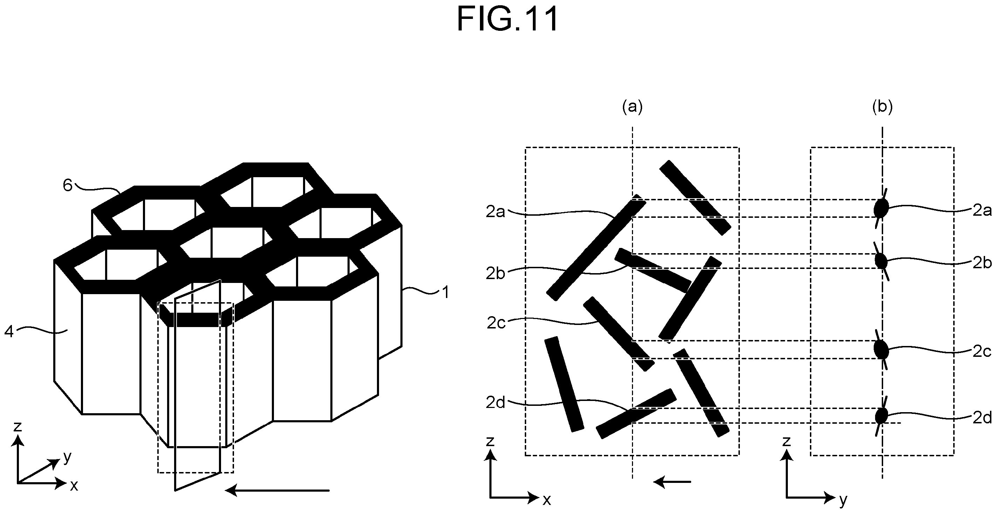

The average fiber orientation angle of the fiber (Cf) in the out-of-plane direction of the cell wall is preferably in the range of 0 to 10 degrees. When the fiber orientation is made in this range, it is possible to improve the compression properties of the core material and the skin-core structural body. The average fiber orientation angle of the fiber (Cf) in the out-of-plane direction may be measured based on the observation of the cross section (z-y plane) that is perpendicular to the plane direction of the cell wall. FIG. 11 illustrates one example of the fiber orientation in the plane direction (FIG. 11(a)) and the perpendicular cross section (FIG. 11(b)) in the cell wall according to the present invention. In FIG. 11(a), focusing on fibers 2a to 2d and observing their cross sections, elliptical cross sections of the fibers 2a to 2d may be recognized as illustrated in FIG. 11(b). When it is a true circle, not an ellipse, this indicates that the fiber is oriented in the x-direction (orthogonal to the y-axis) and is not tilted along the z-axis. The angle between the elliptical major axis and the z-axis in the elliptical shape of the fiber cross section is approximately equal to the out-of-plane direction of the fiber relative to the cell wall. Thus, when the cell wall is cut out, and from the cross section perpendicular to the plane direction of the cell wall, the elliptical major axes of randomly chosen 600 fibers are measured, the arithmetic average value of the absolute values of the angle to the z-axis is considered as the average fiber orientation angle in the out-of-plane direction relative to the cell wall.

The cell shape (cross-sectional shape perpendicular to the axial direction of the columnar cell) of the core material according to the present invention is not particularly limited to polygons such as a triangle, a quadrilateral, and a hexagon as well as a circle and an oval; a regular hexagon, i.e., a honeycomb structure, is preferable from the viewpoint of an impact resistance. When the cell shape is a regular hexagon, a regular hexagon having a side length of 3 mm to 20 mm is generally used; but from the viewpoint of the contact point with the adhesive, a regular hexagon having a side length of 3 mm to 10 mm is preferable, and 3 mm to 7 mm is more preferable. From the viewpoints of reducing the property variation within the core material and providing the shape formability matching to the skin-core structural body having a complex shape, it is preferable that the collective body of the cells is composed of the cells having multiple types of polygonal cell shapes or is a combination of cell shapes having different sizes. Preferable examples of the combination of the polygonal shapes include a truncated icosahedron, which is a combination of pentagons and hexagons, and a curved shape using a part of it, because these allow the core open surface to be spherical or other curved shapes.

The core material according to the present invention may be produced, for example, by using a fiber mat (A) formed of the fiber (Cf) and a sheet base material (B) that is impregnated with the resin (Cr) as the matrix, with a known method such as a stretch method and a corrugating method. In the stretch method, a bonding material such as an adhesive is applied to the sheet base material (B) in strips, and multiple sheets are stacked in a positional relationship where the applied bonding material is displaced by half a pitch, and then the sheets are bonded by heating and pressing, which is followed by pulling (stretching) in the direction of stacking to obtain the core material. In the corrugating method, the sheet base material (B) is first folded into a corrugated plate, and the resulting multiple corrugated plates are stacked in a block form with each valley and top in a positional relationship where they are displaced by half a pitch of the wave while interleaving a bonding material such as an adhesive, which is then followed by heating and pressing for bonding to obtain the core material.

It is preferable that the fiber mat (A) is composed of the fibers (Cf) that are discontinuous. One method of producing the fiber mat is performed, for example, by preliminarily dispersing the fibers (Cf) to the form of strand and/or rough monofilament to produce the fiber mat. The fiber mat may be produced by a dry process such as an air laid method, in which the fibers (Cf) are dispersed into a sheet by an air flow, or the carding method, in which the fibers (Cf) are mechanically combed and shaped into a sheet; alternatively the fiber mat may be produced by a wet process using the Radlite method, in which the fibers (Cf) are agitated in water followed by paper making. In the dry process, illustrative examples of the method in which the fiber (Cf) is made closer to a monofilament state include: the method in which an opening bar of the fibers is installed, the method in which the opening bar of the fibers is vibrated, the method in which the card opening is made finer, and the method in which the rotation speed of the card is adjusted. In the wet process, illustrative examples of the method include: the method in which an agitation condition of the fiber (Cf) is adjusted, the method in which the fiber concentration in the dispersion solution is diluted, the method in which the viscosity of the dispersion solution is adjusted, and the method in which an eddy current when the dispersion solution is transferred is suppressed. It is especially preferable that the fiber mat is produced by the wet process, with which the fiber (Cf) ratio in the fiber mat may be readily adjusted by adjusting the concentration of the fibers to be charged, the flow rate (flow amount) of the dispersion solution, and the moving speed of the mesh conveyor. For example, by slowing the speed of the mesh conveyor relative to the flow rate of the dispersion solution, the fibers in the resulting fiber mat are less oriented in the take-up direction, making it possible to produce a bulky fiber mat. The fiber mat may be composed of the fibers (Cf) alone, the fibers (Cf) may be mixed with the matrix resin component in a powder form or a fiber form, the fibers (Cf) may be mixed with an organic compound or with an inorganic compound, or the fibers (Cf) may be cemented to each other by the resin component.

Moreover, the fiber mat (A) may be impregnated with the resin (Cr) to make the sheet base material (B), which may be used as the matrix for the core material. From the viewpoint of ease of production, the preferable method for producing the sheet base material is to provide the fiber mat with the resin (Cr) that is heated at or above the temperature at which it melts or softens, which is then followed by applying a pressure to impregnate the fiber mat. Specifically, an example of the preferable method involves the melt impregnation of the stacked product that is placed with the resin (Cr) from both sides of the fiber mat in the thickness direction. On the other hand, in the method in which the resin is melted or softened, besides heating, there may be mentioned an example in which the apparent viscosity is lowered by diluting the resin component with a solvent capable of dissolving thereof, which is then followed by penetrating it into the fiber mat, and further followed by removing only the solvent by volatilization or evaporation.

As for the equipment to perform the methods described above, a compression molding machine and a double belt press may be suitably used. In the case of the batch system, the former equipment may be suitably used, in which productivity may be improved by using an intermittent pressing system in which two or more machines, one for heating and the other for cooling, are installed in parallel. The latter equipment is for the case of the continuous system, which offers a superior continuous productivity because the continuous processing may be readily performed with this system.

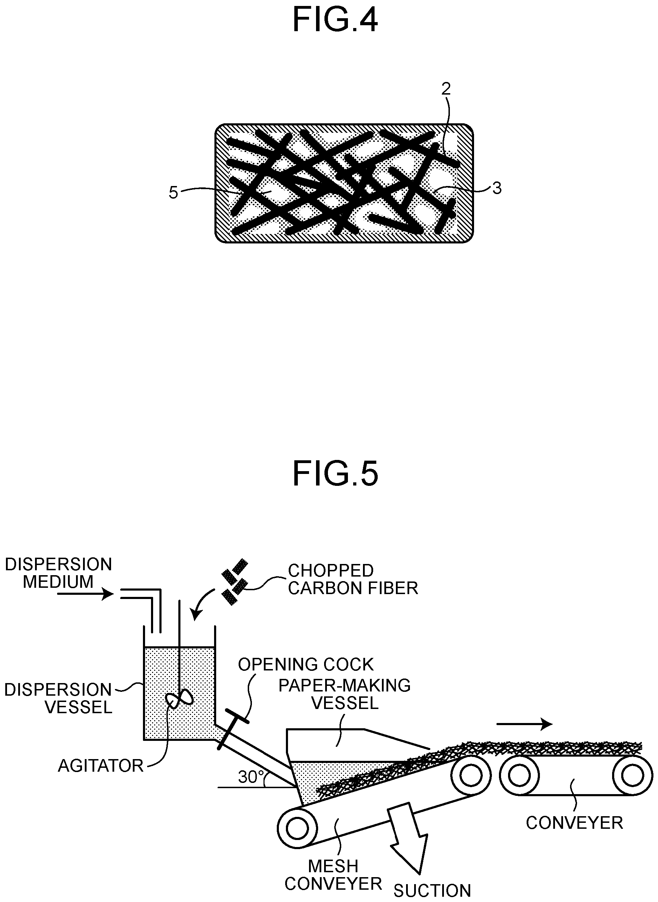

FIG. 3 is an enlarged schematic diagram of one embodiment of the fiber mat (A) included in the aforementioned sheet base material (B), illustrated together with the resin (Cr) impregnated therein. In this embodiment, the fiber mat (A) is a nonwoven fabric composed of the discontinuous fibers (Cf) 2. The fiber mat (A) impregnated with the resin (Cr) 3 in a compressed state will be subjected to spring back by being released from the compressed state as the resin (Cr) 3 melts or softens. As illustrated in FIG. 4, the spring back generates the void 5, so that a porous structural portion composed of the fiber (Cf) 2 covered by the resin (Cr) 3 may be formed in any part of the cell wall.

For the fiber mat (A) to express the spring back characteristics, it is preferable that the fibers present therein are dispersed in a monofilament form. When the fibers are dispersed in a monofilament form, the number of contact points among the fibers increases, resulting in a more accurate three-dimensional structure of the fiber mat (A), which makes it easier to cause the spring back.

Illustrative examples of the fiber (Cf) that may be used in the core material according to the present invention include a carbon fiber, a glass fiber, an aramid fiber, an alumina fiber, a silicon carbide fiber, a boron fiber, a metallic fiber, a natural fiber, and a mineral fiber, in which these may be used singly, or two or more of these may be used together. Among them, from the viewpoint of high specific strength and specific rigidity as well as the weight reducing effect, carbon fibers such as a PAN type, a pitch type, and a rayon type are preferably used. From the viewpoint of increasing the economic performance of the resulting molded product, a glass fiber may be used preferably, and from the viewpoint of balancing the mechanical properties and the economic performance, it is preferable to use a carbon fiber together with a glass fiber. From the viewpoint of enhancing the shock absorption and the formability of the resulting molded product, an aramid fiber is preferably used, and especially from the viewpoint of balancing the mechanical properties and the shock absorption, it is preferable that a carbon fiber and an aramid fiber are used together. From the viewpoint of increasing the conductivity of the resulting molded product, the fibers covered with a metal such as nickel, copper, or ytterbium may also be used.

As for the fiber (Cf), a fiber having a tensile modulus of 100 GPa or more is preferably used. The use of the fiber having a tensile modulus of 100 GPa or more in the fiber mat (A) makes it easier to cause the spring back, which is advantageous in forming the porous structural portion. Illustrative examples of the fiber having a tensile modulus of 100 GPa or more include a para-type aramid fiber, a boron fiber, a carbon fiber, and a graphite fiber; among these, a carbon fiber is preferably used because this does not have a water absorption problem and has excellent strength and elastic modulus.

It is preferable that the carbon fiber used as the fiber (Cf) according to the present invention has the tensile modulus in the range of 200 to 600 GPa. The tensile modulus of the carbon fiber is affected by the crystallinity of the graphite structure that makes up the carbon fiber, in which the higher the crystallinity, the higher the elastic modulus. Also, the higher the crystallinity, the higher the conductivity. This range is preferable because the fiber-reinforced composite material may be provided with a conductivity, a rigidity, and a strength in good balance each at a high level. The elastic modulus is more preferably in the range of 230 to 400 GPa, and still more preferably in the range of 260 to 370 GPa. Here, the tensile modulus of the fiber is the value measured in accordance with JIS R7601-2006. Illustrative examples of the commercially available product of the carbon fiber include "TORAYCA (registered trade mark)" T800S-24K, "TORAYCA (registered trade mark)" T300-3K, "TORAYCA (registered trade mark)" M55J-6K, and "TORAYCA (registered trade mark)" T700S-12K (all manufactured by Toray Industries, Inc.).

The fiber (Cf) contained in the fiber-reinforced composite material that makes up the core material according to the present invention is the discontinuous fiber; more specifically, the number-average fiber length thereof is preferably 1 mm or more and 50 mm or less, more preferably 3 mm or more and 20 mm or less, and still more preferably 4 mm or more and 10 mm or less. This range is preferable because this makes it easier to enlarge the space between the fibers (Cf) and to control the formation of the porous structural portion. The fibers (Cf) are randomly dispersed, which is a preferable aspect, because the uneven concentration of the fibers (Cf) and the resin (Cr) in the porous structural portion is so small that the porous structural portion having an excellent isotropic property is obtained.

It is preferable that the fiber (Cf) of the cell wall in the core material is made up of 0 to 50% by mass of the fibers having a fiber length of more than 10 mm, 50 to 100% by mass of the fibers having a fiber length of 2 to 10 mm, and 0 to 50% by mass of the fibers having a fiber length of less than 2 mm. When the content of the fibers having a fiber length of more than 10 mm is more than 50% by mass, the expansion in the thickness direction during the molding process may become significant, resulting in impairing of the handling properties thereof. When the content of the fibers having the length of less than 2 mm is more than 50% by mass, not only the mechanical properties of the resulting core material and skin-core structural body may deteriorate, but also the fiber mat (A) or the sheet base material (B) obtained by impregnating the resin into it may not have sufficient strength, resulting in impairing of the formability thereof. From these viewpoints, it is preferable that the fiber is made up of 80 to 100% by mass of the fibers having a fiber length of 3 to 8 mm, and it is more preferable that the fiber is made up of the fibers having at least two peaks in the fiber length distribution, one peak in the range of 5 to 10 mm and the other in the range of 2 to 5 mm of the fiber length. By setting the fiber length distribution within the more preferable range, it becomes possible to use, together with the fibers that ensure the mechanical properties, the fibers that ensure the handling property of the preform in the stacking process or in the molding process, so that the both properties may be easily satisfied compatibly. It is noted that the mass ratio of the fibers represents the ratio of the number-average fiber length based on 100% as the fiber.

The average pore diameter of the porous structural portion, measured by the mercury intrusion method, is preferably 1 um or more and 200 $\mu$m or less, and more preferably 10 um or more and 100 $\mu$m or less. When the average pore diameter is too small, the weight reduction effect may not be sufficient, and when it is too large, the mechanical properties may be deteriorated. The mercury intrusion method is the method of measuring a pore diameter using a mercury intrusion porosimeter, in which mercury intrudes into a sample at a high pressure, and the pore diameter may be determined from the pressure applied and the intruding amount of the mercury. The average pore diameter is the value that may be obtained from the following formula (1).

$$\text{(Average pore diameter)} = 4 \times \text{(pore volume)} / \text{(specific surface area)} \qquad \text{Formula (1)}$$

The resin (Cr) contained in the fiber-reinforced composite material that makes up the core material according to the present invention may be a thermoplastic resin or a thermosetting resin. Illustrative examples of the thermoplastic resin include: polyester resins such as polyethylene terephthalate and polybutylene terephthalate; polyolefins such as polyethylene, polypropylene, polybutylene, modified polypropylene, and polyoxymethylene; polyamides such as polyamide 6 and polyamide 66; polycarbonate; polymethyl methacrylate; polyvinyl chloride; polyarylene sulfides such as polyphenylene sulfide; polyphenylene ether; modified polyphenylene ether; polyimide; polyamide imide; polyether imide; polysulfone; modified polysulfone; polyether sulfone; polyketone; polyarylene ether ketones such as polyether ketone, polyether ether ketone, and polyether ketone; polyarylate, polyether nitrile, and phenoxy resin. These thermoplastic resins may also be copolymers, modified resins, and/or blends of two or more of these resins. Among these, from the viewpoints of the heat resistance and the mechanical properties, at least one thermoplastic resin selected from the group composed of polyarylene sulfide, polyetherimide, polyethersulfone, polysulfone, and polyarylene ether ketone is more preferable.

Illustrative examples of the thermosetting resin include an unsaturated polyester resin, a vinyl ester resin, an epoxy resin, a phenol resin, a urea resin, a melamine resin, a thermosetting polyimide resin, a BT resin, a cyanate ester resin, a bismaleimide resin, a benzoxazine resin, as well as a copolymer of these resins, a modification thereof, and/or a blend of two or more of these resins. Among these, from the viewpoints of the heat resistance and the mechanical properties, at least one thermosetting resin selected from the group composed of an epoxy resin, a phenol resin, a benzoxazine resin, a BT resin, a cyanate ester resin, a bismaleimide resin, and a polyimide resin is more preferable.

In addition, depending on the use thereof, the resin (Cr) contained in the fiber-reinforced composite material that makes up the core material according to the present invention may contain other filler or additive as appropriate, to the extent that the purpose of the present invention is not impaired. Illustrative examples thereof include an inorganic filler, a flame retardant, a conductivity-affording agent, a crystal nucleating agent, a UV absorber, an antioxidant, a vibration-damping agent, an antibacterial agent, an insect repellent, an odor repellent, a coloring inhibitor, a heat stabilizer, a mold release agent, an antistatic agent, a plasticizer, a lubricant, a colorant, a pigment, a dye, a foaming agent, an antifoaming agent, and a coupling agent.

From the viewpoint of improving the flame retardancy of the structural body, it is preferrable that the resin (Cr) and the resin (Sr) used in the skin-core structural body have a LOI value (limiting oxygen index) of 26% or more, and more preferably 30% or more. The LOI value may be measured by the method, for example, in accordance with JIS K7201-2 (2007). Illustrative examples of the resin having a LOI values of 26% or more include a polyarylene sulfide resin, a polyether imide resin, a polyether sulfone resin, a polyarylene ether ketone resin, a polyimide resin, and a phenol resin. The range of the LOI value described above may also be achieved by adding a flame retardant to the resin. For example, a resin composition having a flame retardant added to an epoxy resin is preferable because this can provide the skin material-core material with a high bonding strength. As for the flame retardant, a phosphorus-type flame retardant, a nitrogen-type flame retardant, and an inorganic flame retardant are preferably used.

For the flame retardancy of the skin-core structural body according to the present invention, the burning time may be measured by the method in accordance with FAR 25.853 Appendix F. The superiority of the burning time is judged in accordance with Advisory Circular (AC) 25.853-1a(1)i, "Flammability Requirements for Aircraft Seat Cushions", published by the Federal Aviation Administration. The burning time of the structural body after extinguishing the ignition source is 30 seconds or less, and preferably 15 seconds or less. When the structural body burns longer than 30 seconds, it means that it burns readily, which is undesirable from the safety viewpoint. There is no restriction on the lower limit of the burning time of the structural body, because the shorter the time, the better the combustibility. The above FAR 25.853 Appendix F of the U.S. Federal Aviation Regulations (FAR) is used to measure and evaluate the burning time by fixing the test specimen with its long sides vertical, which is followed by applying a flame to the center of the specimen bottom using a burner from just below of it for burning. In this evaluation method, the distance of the specimen from the burner is set to 19 mm, and the time during which the flame from the specimen continues after the specimen is burned for 60 seconds is determined as the burning time.

<Skin-Core Structural Body>

As described above, the core material according to the present invention is preferably used as the skin-core structural body having the skin material bonded to at least one side, preferably both sides, of the core open surface where the columnar cell opens. There is no particular restriction on the method of bonding the skin material to the core material; examples thereof include the bonding by means of an adhesive and of a thermal welding. For example, an adhesive sheet and a skin material or a prepreg that serves as the precursor of the skin material are placed on both sides of the core open surface so that this may be bonded to the core material with heating to cure. From the viewpoint of the weight reduction of the skin-core structural body, it is more preferable to bond the core material to the skin material directly without using the adhesive film; thus, it is preferable to place and stack them such that the skin material is in contact with the core open surface, which is then followed by bonding them by heating and pressing. There is no particular restriction on the bonding process; thus, the product may be formed by a vacuum bag molding, an autoclave molding, a press molding, and the like.

As for the skin material, it is preferable to contain a resin. When the resin (Sr) of the skin material is a thermosetting resin, it is preferable to place the uncured prepreg in contact with the core open surface and bond them with heating and pressing, what is called co-curing. Compared to what is called co-bonding, in which the skin material is pre-cured and then bonded to the core material using an adhesive, the co-curing requires fewer molding cycles, enabling a shorter molding time, which is advantageous in terms of the molding cost. In addition, the co-curing of the skin material allows the fibers (Cf) to penetrate into the skin material, so that they may be strongly bonded.

When the resin (Sr) of the skin material is a thermoplastic resin, it is preferable to bond it to the core material with pressing and heating at a temperature equal to or higher than the melting point of the resin (Sr). The co-curing of the skin material allows the fiber (Cf) to readily penetrate into the resin (Sr) of the skin material, so that the skin material and the core material may be firmly bonded. When the core material and the skin material of the skin-core structural body are bonded using an adhesive, it is preferable that a part of the resin (Sr) that makes up the skin material and/or a resin (Ar) contained in the adhesive flows into the porous structural portion of the core material.

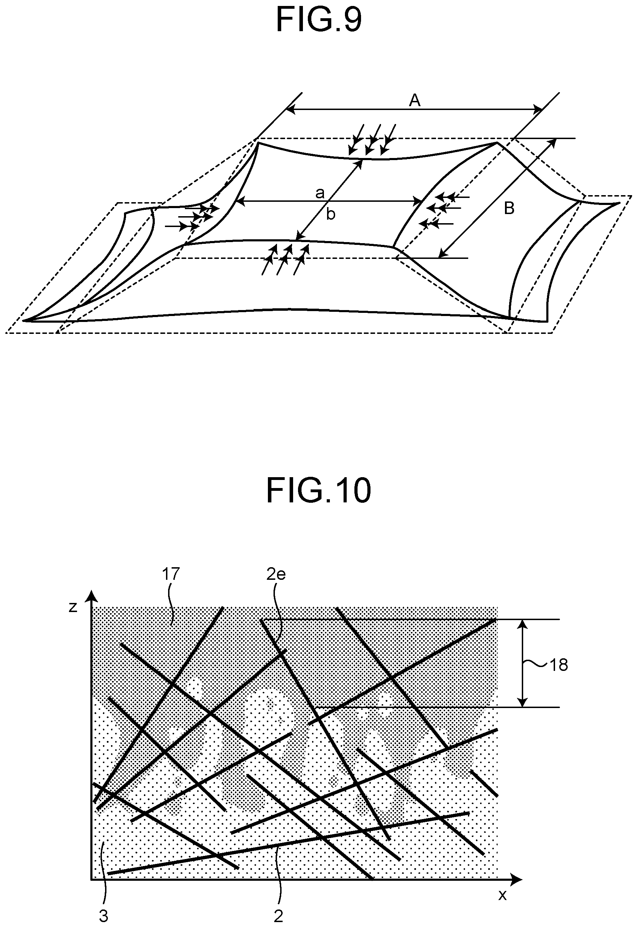

In the skin-core structural body according to the present invention, it is preferable that a part of the discontinuous fibers (Cf) contained in the cell wall of the core material penetrates into the skin material. An aspect of the state in which the fibers (Cf) penetrate into the skin material is illustrated in FIG. 10. Namely, there are the fibers (Cf) 2 that are in contact with both a resin (Sr) 17 of the skin material and the resin (Cr) 3 of the core material, straddling the interface layer formed by the resin (Sr) 17 and the resin (Cr) 3. There is no particular restriction on the distance of the fiber (Cf) 2 that penetrates into the skin material (penetration distance 18 of a fiber (Cf) 2e into the skin material in FIG. 10) as long as the advantageous effects of the present invention is not impaired; nevertheless, the maximum penetration distance of the fiber (Cf) 2 into the skin material is preferably 5 um or more, and more preferably 10 um or more. Focusing on a certain fiber (Cf) 2 that has penetrated into the skin material, the penetration distance of the fiber (Cf) 2 into the skin material is defined as the shortest distance from the virtual plane (horizontal plane parallel to the skin material) that exists at the depth of the end of the fiber (Cf) 2 that has penetrated into the side of the resin (Sr) 17 of the skin material to the border between the resin (Sr) 17 of the skin material and the resin (Cr) 3 of the core material, namely, the distance indicated by numerical symbol 18 in the case of the fiber (Cf) 2e illustrated in FIG. 10. Then, the largest value of the measured penetration distance is defined as the maximum penetration distance. Specifically, the maximum penetration distance into the skin material by the fiber (Cf) 2 may be measured by the method described as follows. The bonded portion of the skin material to the core material of the structural body is cut out and its cross section in the thickness direction is photographed at 10 arbitrarily selected locations (10 images) using a laser microscope with a 1000-times magnification, and from the obtained images, the penetration distance of each monofilament of the fiber (Cf) that penetrates into the skin material is measured; then, the largest value among them is considered as the maximum penetration distance.

In the structural body bonded in the way as described above, an average peel torque M (climbing drum peel strength) of the skin material and the core material, measured in accordance with ASTM D1781 (2004), is preferably 30 N•m/m or more, and more preferably 35 N•m/m or more. Having the climbing drum peel strength of 30 N•m/m or more makes this suitable as the structural body because it can withstand a heavy load and expresses a weight reduction effect.

When bonding the skin material to the core material by the thermal welding, it is preferable that a heat resistance temperature Ts of the resin (Sr) that makes up the skin material and a heat resistance temperature Tc of the resin (Cr) that makes up the core material satisfy Ts ≤ Tc. The heat resistance temperature here represents a melting point in the case of a crystalline resin and a glass transition temperature in the case of an amorphous resin or of a thermosetting resin. When satisfying Ts ≤ Tc, it is easier to maintain the shape of the core material, so that it is easier to obtain a high-quality molded body or to mold it in a short time. In addition, this is preferable because it is easy to bond the skin material to the core material by the thermal welding, which leads to simplification of the molding process. It is preferable that Tc is higher than Ts by 10°C or more, and more preferably by 20°C or more.

When forming the porous structural portion to the cell wall, the core material having the porous structural portion pre-formed may be bonded to the skin material, or the porous structural portion may be formed at the same time when bonding to the skin material. In the latter method, for example, when bonding to the skin material, the core material is pressed and heated at the temperature of equal to or higher than the melting point or the softening temperature of the resin (Cr) in the core material, resulting in the spring back of the fiber (Cf), so that the bonding may be performed with forming the porous structural portion in the bonding portion between the core material and the skin material.

In a preferable aspect, the skin material is a fiber-reinforced composite material that contains a fiber (Sf) and the resin (Sr). In this case, it is preferable that the fiber-reinforced composite material that serves as the skin material is formed from a prepreg (D) that is formed by impregnating the resin (Sr) into a reinforced fiber base material (C) that uses the fiber (Sf) as the reinforcing fiber. There is no restriction on the form and arrangement of the reinforcing fiber; thus, they may be in one direction, in a random direction, in a sheet form, in a mat form, in a woven form, in a braided form, or the like. Among these, two-dimensional woven fabrics may be used preferably. Although there is no particular restriction on the weave structure, woven fabrics such as a plain weave, a twill weave, an intertwined weave, and a satin weave are preferable. The plain weave structure is especially preferable because it is easy to create a thin molding body. The woven yarns of the fabric are composed of fiber bundles, in which the number of filaments in a single fiber bundle is preferably in the range of 2500 to 50000. When the number of filaments is less than 2500, the fiber arrangement tends to meander, resulting in the deterioration of the strength thereof. When the number of filaments is more than 50000, it is difficult for the resin to be impregnated into the fibers during formation or molding of the prepreg. The number of filaments is more preferably in the range of 2800 to 25000. From the viewpoint of improving the surface smoothness of the skin-core structural body, the filaments of 5000 or more are especially preferrable.

The basis weight of the fiber (Sf) in the prepreg (D) is preferably in the range of 150 to 550 g/m$^2$. This allows the skin material to have a further enhanced mechanical strength. When the basis weight of the fiber (Sf) is less than 150 g/m$^2$, the mechanical strength thereof may be insufficient, and when more than 550 g/m$^2$, the formability thereof during molding may be impaired. The basis weight of the fiber (Sf) is more preferably in the range of 170 to 500 g/m$^2$. When the mass fraction of the fiber (Sf) in the prepreg is less than 40% by mass, the rigidity of the resulting skin material may be insufficient, and when more than 85% by mass, a void may be easily formed in the resulting skin material.

Specifically, illustrative examples of the fiber (Sf) used in the present invention include a carbon fiber, a graphite fiber, an aramid fiber, a silicon carbide fiber, an alumina fiber, a boron fiber, a tungsten carbide fiber, and a glass fiber. Several of these fibers may be used in combination. Among these, a carbon fiber and a graphite fiber, which have good specific strength and specific elastic modulus and are recognized to significantly contribute to the weight reduction, are superior in the present invention. As for the carbon fiber and the graphite fiber, every kind of the carbon fiber and the graphite fiber may be used in accordance with the use thereof. From the viewpoints of the inherent tensile strength of the fiber and the high impact resistance when used as the skin-core structural body, the fiber having a strand strength of 3000 MPa or more and 7500 MPa or less in a strand tensile test, and an elastic modulus of 200 GPa or more and 600 GPa or less is preferably used. The strand tensile test is performed by impregnating bundles of the carbon fibers with a matrix resin having the following composition, which is followed by curing it at 130°C for 35 minutes and then performing measurement in accordance with JIS R7601 (2006).

The number of filaments in the carbon fiber used as the fiber (Sf) in the present invention is preferably in the range of 1000 to 100000, and more preferably 3000 to 50000. When the number of filaments in the carbon fiber is less than 1000, the operation at the prepreg-forming process becomes more cumbersome, and when the number is more than 100000, it becomes difficult to impregnate the resin between the filaments, which may result in failure of the impregnation.

In the fiber (Sf) used in the present invention, a tensile modulus E is preferably 200 GPa or more, and a fracture strain strength ε is preferably 40 MPa or more. The use of the fiber having the high tensile modulus leads to a high strength in the climbing drum peel method, which is one of the bonding evaluation methods between the skin material and the core material. The fracture strain strength ε is calculated based on the following formula: $\varepsilon = \sigma^2/2E$, using the tensile strength ($\sigma$: MPa) and the elastic modulus (E: MPa) measured in accordance with JIS-R7601 (2006). Specifically, illustrative examples of the commercially available product of the carbon fiber having high strength and high elongation as mentioned above include "TORAYCA (registered trademark)" T800G-24K, "TORAYCA (registered trademark)" T800S-24K, "TORAYCA (registered trademark)" T700G-24K, "TORAYCA (registered trademark)" T700S-24K, "TORAYCA (registered trademark)" T300-3K, and "TORAYCA (registered trademark)" T1100G-24K (all manufactured by Toray Industries, Inc.).

The resin (Sr) contained in the skin material may be any of the thermoplastic resin and the thermosetting resin. Illustrative examples of the thermoplastic resin include: polyester resins such as polyethylene terephthalate and polybutylene terephthalate; polyolefins such as polyethylene, polypropylene, polybutylene, modified polypropylene, and polyoxymethylene; polyamides such as polyamide 6 and polyamide 66; polycarbonate; polymethyl methacrylate; polyvinyl chloride; polyarylene sulfides such as polyphenylene sulfide; polyphenylene ether; modified polyphenylene ether; polyimide; polyamide imide; polyether imide; polysulfone; modified polysulfone; polyether sulfone; polyketone; polyarylene ether ketones such as polyether ketone, polyether ether ketone, and polyether ketone; polyarylate, polyether nitrile, and phenoxy resin. These thermoplastic resins may also be copolymers, modified resins, and/or blends of two or more of these resins. Among these, from the viewpoints of the heat resistance and the mechanical properties, at least one thermoplastic resin selected from the group composed of polyarylene sulfide, polyetherimide, polyethersulfone, polysulfone, and polyarylene ether ketone is more preferable.

Illustrative examples of the thermosetting resin include an unsaturated polyester resin, a vinyl ester resin, an epoxy resin, a phenol resin, a urea resin, a melamine resin, a thermosetting polyimide resin, a cyanate ester resin, a BT resin, a bismaleimide resin, a benzoxazine resin, as well as a copolymer of these resins, a modification of these resins, and/or a blend of two or more of these resins. Among these, from the viewpoints of the heat resistance and the mechanical properties, at least one thermosetting resin selected from the group composed of an epoxy resin, a phenol resin, a benzoxazine resin, a BT resin, a cyanate ester resin, a bismaleimide resin, and a polyimide resin is more preferable.

In addition, depending on the use thereof, the resin (Sr) contained in the skin material according to the present invention may contain other filler or additive as appropriate, to the extent that the purpose of the present invention is not impaired. Illustrative examples thereof include an inorganic filler, a flame retardant, a conductivity-affording agent, a crystal nucleating agent, a UV absorber, an antioxidant, a vibration-damping agent, an antibacterial agent, an insect repellent, an odor repellent, a coloring inhibitor, a heat stabilizer, a mold release agent, an antistatic agent, a plasticizer, a lubricant, a colorant, a pigment, a dye, a foaming agent, an antifoaming agent, and a coupling agent.

[Examples]

The materials used in Examples and Comparative Examples are as follows.

[Carbon Fiber 1]

Spinning, firing, and surface oxidation treatment of the polyacrylonitrile-based copolymer were performed to obtain continuous carbon fibers with a total monofilament number of 12,000. The properties of this continuous carbon fiber were as follows.

Monofilament diameter: 7 um
Specific gravity: 1.8
Tensile strength: 4600 MPa
Tensile modulus: 220 GPa

[PEEK Resin]

A resin film with a basis weight of 60 g/m$^2$ was prepared from a polyether ketone resin ("KEPSTAN" (registered trademark) 7002, manufactured by Alkema S.A.).

[PPS Resin]

A resin film with a basis weight of 60 g/m$^2$ was prepared from a polyphenylene sulfide resin ("Torelina" (registered trademark) M2888, manufactured by Toray Industries, Inc.).

[PEI Resin]

A resin film with a basis weight of 60 g/m$^2$ was prepared from a polyether imide resin ("ULTEM" (registered trademark) 1000, manufactured by SABIC Corp.).

[Carbon Fiber Mat 1]

The carbon fiber 1 was cut to 6 mm using a cartridge cutter to obtain the chopped carbon fibers. A dispersion solution with a concentration of 0.1% by mass composed of a surfactant (polyoxyethylene lauryl ether (trade name), manufactured by Nacalai Tesque, Inc.) and water was prepared, and the carbon fiber mat was produced using this dispersion solution and the chopped carbon fibers by using the carbon fiber mat production equipment illustrated in FIG. 5. The production equipment illustrated in FIG. 5 is equipped with, as the dispersion tank, a cylindrical vessel with a diameter of 1000 mm having an opening cock at the bottom of the vessel, and a linear transporting portion (inclination angle of 30°) that connects the dispersion vessel to the paper-making vessel. In the dispersion vessel, an agitator is arranged on the top opening thereof, through which the chopped carbon fibers and the dispersion solution (dispersion medium) may be charged. The paper-making vessel is equipped with at its bottom a mesh conveyor having a paper-making surface with a width of 500 mm, and this mesh conveyer is connected to a conveyor that is capable of transporting the carbon fiber base material (paper base material). The paper making was performed with a carbon fiber concentration of 0.05% by mass in the dispersion solution. The resulting carbon fiber base material was then dried in a drying oven at 200°C for 30 minutes to obtain the carbon fiber mat 1. The resulting basis weight was 40 g/m$^2$.

[Sheet Base Material 1]

The carbon fiber mat 1 as the carbon fiber mat and the PEKK resin as the resin film were placed in the order of [resin film/carbon fiber mat/resin film] to obtain a stacked thing. Next, the sheet base material 1 was obtained by the following processes (I) through (IV).

(I) The stacked thing was placed in the cavity of the press molding equipment that had been pre-heated to 250°C, and then the mold was closed and kept as it was for 120 seconds.
(II) Next, a pressure of 5 MPa was applied and the temperature was raised to 350°C, which was then followed by keeping as it was for 10 minutes.
(III) The cavity temperature was lowered to 50°C while keeping the pressure as it was.
(IV) The mold was opened and the resulting sheet base material was taken out.

[Sheet Base Material 2]

The carbon fiber mat 1 as the carbon fiber mat and the PPS resin as the resin film were placed in the order of [resin film/carbon fiber mat/resin film] to obtain a stacked thing. Next, the sheet base material 2 was obtained by the following processes (I) through (IV).

(I) The stacked thing was placed in the cavity of the press molding equipment that had been pre-heated to 200°C, and then the mold was closed and kept as it was for 120 seconds.
(II) Next, a pressure of 5 MPa was applied and the temperature was raised to 300°C, which was then followed by keeping as it was for 10 minutes.
(III) The cavity temperature was lowered to 50°C while keeping the pressure as it was.
(IV) The mold was opened and the resulting sheet base material was taken out.

[Sheet Base Material 3]

The carbon fiber mat 1 as the carbon fiber mat and the PEI resin as the resin film were placed in the order of [resin film/carbon fiber mat/resin film] to obtain a stacked thing. Next, the sheet base material 3 was obtained by the following processes (I) through (IV).

(I) The stacked thing was placed in the cavity of the press molding equipment that had been pre-heated to 250°C, and then the mold was closed and kept as it was for 120 seconds.
(II) Next, a pressure of 5 MPa was applied and the temperature was raised to 350°C, which was then followed by keeping as it was for 10 minutes.
(III) The cavity temperature was lowered to 50°C while keeping the pressure as it was.
(IV) The mold was opened and the resulting sheet base material was taken out.

[Honeycomb Core 1]

The honeycomb core 1 was fabricated by the corrugating method using the sheet base material 1 as the matrix. First, the matrix was folded into corrugated plates, and the resulting multiple corrugated plates were stacked in a block form with each valley and top in a positional relationship in which they were displaced by half a pitch of the wave while interleaving an adhesive, which was then followed by heating and pressing to bond them, thereby obtaining a precursor of the honeycomb core. Next, the open end portion of the resulting precursor of the honeycomb core was heated using a pressing machine at 320°C to produce the honeycomb core 1 (thickness of the core material (axial direction of the cell wall): 12.7 mm, and the mass per unit volume: 45 kg/m$^3$) having the porous structural portion at the open end portion of the cell wall.

[Honeycomb Core 2]

The honeycomb core 2 was fabricated by the corrugating method using the sheet base material 1 as the matrix. First, the matrix was folded into a corrugated plate while heating at 320°C to obtain the corrugated plate having the porous structural portion. The resulting multiple corrugated plates were stacked in a block form with each valley and top in a positional relationship in which they were displaced by half the pitch of the wave while interleaving an adhesive, which was then followed by heating and pressing to bond them, thereby obtaining the honeycomb core 2 (thickness of the core material: 12.7 mm, and the mass per unit volume: 45 kg/m$^3$) having the porous structural portion to the cell wall.

[Honeycomb Core 3]

The honeycomb core 3 was fabricated by the corrugating method using the sheet base material 2 as the matrix. First, the matrix was folded into a corrugated plate while heating at 280°C to obtain the corrugated plate having the porous structural portion. The resulting multiple corrugated plates were stacked in a block form with each valley and top in a positional relationship in which they were displaced by half the pitch of the wave while interleaving an adhesive, which was then followed by heating and pressing to bond them, thereby obtaining the honeycomb core 3 (thickness of the core material: 12.7 mm, and the mass per unit volume: 50 kg/m$^3$) having the porous structural portion to the cell wall.

[Honeycomb Core 4]

The aramid honeycomb (model number: SAH1/8-3.0, thickness of core material: 12.7 mm, and the mass per unit volume: 48 kg/m$^3$, manufactured by Showa Aircraft Industry Co., Ltd.) was used as the honeycomb core 4.

[Honeycomb Core 5]

This was fabricated by the corrugating method using the sheet base material 1 as the matrix. First, the matrix was folded into a corrugated plate while heating at 320°C to obtain the corrugated plate having the porous structural portion. The average pore diameter and density of the porous structural portion thereof were adjusted by reducing the thickness of the corrugated plate relative to the core material 2. The resulting multiple corrugated plates were stacked in a block form with each valley and top in a positional relationship in which they were displaced by half the pitch of the wave while interleaving an adhesive, which was then followed by heating and pressing to bond them, thereby obtaining the honeycomb core 5 (thickness of the core material: 12.7 mm, and the mass per unit volume: 50 kg/m$^3$) having the porous structural portion to the cell wall.

[Honeycomb Core 6]

This was fabricated by the corrugating method using the sheet base material 3 as the matrix. First, the matrix was folded into a corrugated plate while heating at 350°C to obtain the corrugated plate having the porous structural portion. The resulting multiple corrugated plates were stacked in a block form with each valley and top in a positional relationship in which they were displaced by half the pitch of the wave while interleaving an adhesive, which was then followed by heating and pressing to bond them, thereby obtaining the honeycomb core 6 (thickness of the core material: 12.7 mm, and the mass per unit volume: 50 kg/m$^3$) having the porous structural portion to the cell wall.

[Prepreg 1 Used for Skin Material]

Epoxy resins (40 parts by mass of "Araldite (registered trademark)" MY721 manufactured by Huntsman Advanced Materials, Inc., 35 parts by mass of "Epikote (registered trademark)" 828, 25 parts by mass of "Epikote (registered trademark)" 1001, and 25 parts by mass of "Epikote (registered trademark)" 154; all of these Epikotes were manufactured by Japan Epoxy Resins Co., Ltd.) were heated and mixed with polyether sulfone ("SUMIKAEXCEL (registered trademark)" PES 5003P: 5 parts by mass, manufactured by Sumitomo Chemical Company) in a kneader to uniformly dissolve the polyether sulfone, and then, polyamide particles ("AMILAN (registered trademark)" SP-500: 13 parts by mass, manufactured by Toray Industries, Inc.) and a curing agent ("Seikacure (registered trademark)" S: 36 parts by mass, manufactured by Seika Corp.) were kneaded by the kneader to obtain an uncured epoxy resin composition, from which an epoxy resin film was prepared by using a knife coater. Next, the resulting films were stacked on both sides of the carbon fiber fabrics to impregnate the resin composition while being heated and pressed using a heat roll to produce the prepreg 1 having a fiber volume content of 60%. The carbon fiber fabric used was the plain weave CF6273H (fiber basis weight: 193 g/m$^2$) made of the carbon fiber "TORAYCA (registered trademark)" T700G-12K (number of fibers: 12000, tensile strength: 4.9 GPa, tensile modulus: 240 GPa, and tensile elongation: 2.1%) manufactured by Toray Industries, Inc.

The evaluation methods for the structure, the physical properties, and so forth in each of Examples and Comparative Examples are as follows.

[Evaluation of Average Pore Diameter]

The pore diameter was measured using Autopore IV 9510 manufactured by Micromeritics Instruments Corp. as the mercury intrusion porosimeter with a mercury intrusion pressure ranging from 4 kPa to 400 MPa. The average pore diameter was determined from the pore volume and the specific surface area obtained as the results of the measurement using the formula (1).

(Average pore diameter) = 4 × (pore volume) / (Specific surface area)          Formula (1)

[Evaluation of Mass per Unit Volume of Cell Wall, W]

The mass per unit volume of the cell wall, W, is obtained by dividing the sample mass [g] by the volume [cm$^3$] determined from the circumference of the sample, which is prepared by cutting the cell wall from the core material, and is the arithmetic average value of the values measured on five randomly chosen samples. To exclude the effect of the adhesive between the cell walls, a part where the cell wall was one was cut out and used as the sample.

[Evaluation of Area Ratio Occupied by Cell Wall on Core Open Surface (Bonding Area Ratio)]

The open surface of the core material was photographed using an optical microscope, and a randomly chosen 50 mm×50 mm area on the photograph was image-processed using an image processor (CV-3000, manufactured by KEYENCE Corp.) to evaluate the area ratio occupied by the cell wall on the open surface (bonding area ratio).

[Sandwich Structural Body]

The following procedures (1) and (2) were used to fabricate the sandwich structural body having the skin material bonded to the honeycomb core (hereinafter this is referred to as "honeycomb sandwich structural body").

(1) Sample Stacking

A 2-ply symmetrical stacking configuration was made in which the prepreg 1 was placed with (±45°)/(0°/90°) on each of the top and bottom of the core open surface of each honeycomb core (the outermost layer was ±45° to the honeycomb core).

(2) Sample Molding

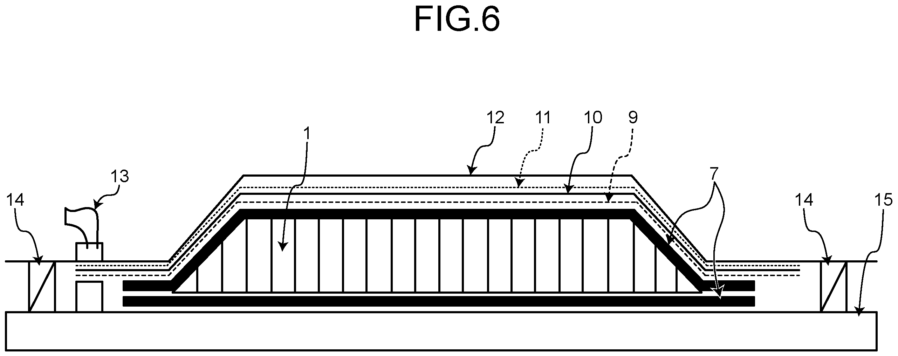

The following procedures (a) through (d) were performed as illustrated in FIG. 6.

(a) The unmolded body having a honeycomb core (core material) 1 stacked with the prepreg as a skin material 7 is placed on an aluminum tool plate 15 that is coated with a mold release agent.
(b) A Teflon (registered trademark) film 9, a silicone rubber 10, and a bleeder 11 were stacked on the surface of the prepreg in this order, and the whole of them was covered with a nylon bag film 12. A sealed space was formed by placing a sealing material 14 between the aluminum tool plate 15 and the nylon bag film 12. The inside of the nylon bag film 12 (hereinafter this is abbreviated as "inside the system") is then evacuated through a vacuum nozzle 13, and this is placed in an autoclave with keeping the vacuum state.
(c) The pressure in the autoclave is increased to 0.15 MPa, then the pressure inside the system is returned to a normal pressure, then the pressure in the autoclave is increased to 0.30 MPa, and then the temperature is started to be raised.
(d) While the pressure in the autoclave is kept at 0.30 MPa until the molding is completed, the temperature is raised to 180°C at a rate of 1.5°C/min, and then this was allowed to be kept at 180°C for 2 hours to cure the resin and bond this to the honeycomb core; then, the temperature is lowered to room temperature at a rate of 2°C/min to obtain the honeycomb sandwich structural body.

[Measurement of Climbing Drum Peel Strength]

The sample was cut out from the resulting honeycomb sandwich structural body, and the climbing drum peel strength thereof between the skin panel on the aluminum tool plate side and the honeycomb core was measured in accordance with the ASTM D1781 method.

[Buckling Resistance of Honeycomb Core]

The procedures (1) through (4) below were carried out to measure the core retention rate during molding, and the buckling resistance of the cell wall of the honeycomb core was evaluated as the following three levels.

Good: Core retention rate is 99% or more.
Fair: Core retention rate is less than 99% and 90% or more.
Bad: Core retention rate is less than 90%.

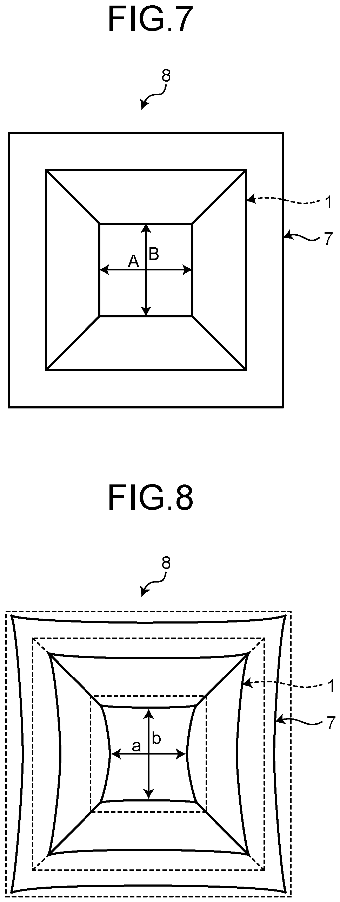

(1) Place 2 plies of the prepreg 1 with ($\pm45°$)/($0°$/$90°$) on each of the top and bottom of each of the honeycomb cores that have been beveled, and stack them.
(2) Measure the horizontal and vertical dimensions A and B of the top surface before molding (illustrated in FIGS. 7 and 9).
(3) Measure the horizontal and vertical dimensions a and b of the top surface after molding (illustrated in FIGS. 8 and 9).
(4)

$$\text{Core retention rate (\%)} = (a \times b) \times 100/(A \times B)$$

The molding was performed under the same conditions as (2) Sample Molding in [Honeycomb Sandwich Structural Body] described before, with stacking and molding preparations as illustrated in FIG. 6.

[Compression Strength]

The sample was cut out from the skin-core structural body described before and tested in accordance with MIL-STD-401 to determine the compression strength (tested under stabilized compression).
Hereinafter, the honeycomb core and the sandwich structural body that were fabricated in Examples and Comparative Examples will be explained.

[Example 1]

Using the honeycomb core 1 and the prepreg 1 obtained by the above methods, the honeycomb sandwich structural body was fabricated with the stacked structure composed of [prepreg/adhesive film/honeycomb core/adhesive film/prepreg]. The evaluation results are described in Table 1.

[Example 2]

The honeycomb sandwich structural body was fabricated in the same way as in Example 1, except that the honeycomb core 2 obtained by the above method was used. The evaluation results are described in Table 1.

[Example 3]

The honeycomb sandwich structural body was fabricated in the same way as in Example 1, except that the honeycomb core 3 obtained by the above method was used. The evaluation results are described in Table 1.

[Example 4]

The sandwich structural body was fabricated in the same way as in Example 1, except that the honeycomb core 5 obtained by the above method was used. The evaluation results are described in Table 1.

[Example 5]

The sandwich structural body was fabricated in the same way as in Example 1, except that the honeycomb core 6 obtained by the above method was used. The evaluation results are described in Table 1.

[Comparative Example 1]

The sandwich structural body was fabricated in the same way as in Example 1, except that the honeycomb core 4 was used. The evaluation results are described in Table 1.

The comparison of Examples 1 to 5 with Comparative Example 1 indicates that, in addition to possessing the air permeability of the core material according to the present invention due to the porous structural portion of the cell wall, the core material according to the present invention is significantly superior in the bonding of the skin material with the core material as indicated by the climbing drum peel strength, and in the buckling resistance and the compression strength of the core material.

[Table 1].

Table 1

| | Unit | Example 1 | Example 2 | Example 3 | Comparative Example 1 | Example 4 | Example 5 |
|---|---|---|---|---|---|---|---|
| Average pore diameter | $\mu$m | 60 | 45 | 50 | - | 9 | 55 |
| Mass per unit volume of cell wall | g/cm$^3$ | 1.29 | 0.60 | 0.50 | 1.40 | 1.00 | 0.48 |
| Climbing drum peel strength | N·m/m | 37 | 34 | 35 | 24 | 28 | 40 |
| Buckling resistance of honeycomb core | - | fair | good | good | bad | fair | good |
| Bonding area ratio of core material open surface | %·m$^3$/kg | 0.22 | 0.15 | 0.18 | 0.06 | 0.08 | 0.21 |
| Compression strength | MPa | 2.5 | 4.0 | 3.4 | 2.0 | 5.2 | 3.0 |

Industrial Applicability

The core material and the skin-core structural body according to the present invention may be suitably used as the structural member for automotive interior and exterior materials, a solar cell reinforcement, a structural material for sporting goods, an aircraft interior material, a flying object structural material, a satellite housing, a transportation box body, and so forth.

The core material and the skin-core structural body according to the present invention are particularly suitable for space equipment such as a satellite, a spacecraft, and a lunar rover, because as the air-permeable structural member, the internal pressure of each cell space inside the core structure and the external pressure (zero pressure in the outer space) may be matched and equalized. The core material and the skin-core structural body according to the present invention are particularly suitable for flying objects such as a UAM (urban air mobility), a drone, and a helicopter as the shock absorbing member because the porous structure in the core material absorbs an impact energy by sequential fracture thereof.

Reference Signs List

1 Core material
2, 2a to 2e Fiber Cf
3 Resin Cr

4 Cell wall
5 Void
6 Porous structural portion
7 Skin material (prepreg)
8 Skin-core structural body
9 Teflon (registered trademark) film
10 Silicone rubber
11 Bleeder
12 Nylon bag film
13 Vacuum nozzle
14 Sealing material
15 Aluminum tool plate
17 Resin Sr
18 Penetration distance of fiber Cf into skin material
A Horizontal dimension of core material before molding
B Vertical dimension of core material before molding
a Horizontal dimension of core material after molding
b Vertical dimension of core material after molding

**Claims**

1.  A core material having a structure comprising a collective body of hollow columnar cells compartmentally formed by a cell wall, wherein the cell wall comprises a fiber-reinforced composite material comprising a fiber (Cf) and a resin (Cr), and at least a part of the cell wall is a porous structural portion composed of an aggregate of the fiber (Cf) covered by the resin (Cr).

2.  The core material according to claim 1, wherein the porous structural portion has at least a continuous pore in a thickness direction of the cell wall.

3.  The core material according to claim 1, wherein an area ratio occupied by the cell wall in an end surface area where the cells open is $0.075\%\cdot m^3/kg$ per unit core density or more.

4.  The core material according to any one of claims 1 to 3, wherein an average pore diameter of the porous structural portion is 1 um or more and 200 $\mu$m or less, the average pore diameter being measured by a mercury intrusion method.

5.  The core material according to any one of claims 1 to 3, wherein a density of the cell wall is 0.1 to 1.3 $g/cm^3$.

6.  The core material according to any one of claims 1 to 3, wherein an average fiber orientation angle in an out-of-plane direction of the fiber (Cf) in the cell wall is 0 to 10 degrees.

7.  The core material according to any one of claims 1 to 3, wherein a tensile modulus of the fiber (Cf) is 100 GPa or more.

8.  The core material according to any one of claims 1 to 3, wherein a structure composed of the collective body of the cells is a honeycomb structure.

9.  The core material according to any one of claims 1 to 3, wherein the collective body of the cells includes cells having a plurality of polygonal cell shapes.

10. The core material according to claim 9, wherein an open surface of the hollow columnar cells has a curved surface shape.

11. A skin-core structural body formed by bonding a skin material to at least one of open end surfaces of the cells of the core material according to any one of claims 1 to 3.

12. The skin-core structural body according to claim 11, wherein the skin-core structural body has a structure in which the fiber (Cf) contained in the core material partially penetrates into the skin material.

13. The skin-core structural body according to claim 11, wherein the skin material includes a fiber-reinforced composite material containing a fiber (Sf) and a resin (Sr) .

14. The skin-core structural body according to claim 13, wherein the fiber (Sf) is a carbon fiber.

15. The skin-core structural body according to claim 11, wherein the skin-core structural body includes the porous structural portion near an open end portion of the hollow columnar cells, and the porous structural portion is bonded to the skin material.

16. The skin-core structural body according to claim 15, wherein the resin (Sr) contained in the skin material and/or a resin (Ar) contained in an adhesive partially flows into the porous structural portion of the core material.

17. The skin-core structural body according to claim 15, wherein a thickness of the cell wall near the open end portion is larger than a thickness of a central portion of the cell wall.

18. Space equipment comprising the core material according to any one of claims 1 to 3 as an air-permeable structural member.

19. A flying object comprising the core material according to any one of claims 1 to 3 as a shock absorbing member.

20. A method for producing a skin-core structural body, the method comprising

stacking a skin material on the core material according to any one of claims 1 to 3 to contact an open surface of the core material, and
heating and pressing the skin material and the core material to bond the skin material and the core material.

# FIG.1

# FIG.2

# FIG.3

# FIG.4

# FIG.5

# FIG.6

EP 4 488 049 A1

# FIG.7

# FIG.8

# FIG.9

# FIG.10

# FIG.11

EP 4 488 049 A1

## INTERNATIONAL SEARCH REPORT

International application No.

**PCT/JP2023/008190**

### A. CLASSIFICATION OF SUBJECT MATTER

***B32B 3/12***(2006.01)i; ***B29C 70/18***(2006.01)i; ***B32B 5/28***(2006.01)i; *B64C 1/00*(2006.01)n; *B64G 1/22*(2006.01)n
FI:   B32B3/12 B; B32B5/28 A; B29C70/18; B64C1/00 B; B64G1/22

According to International Patent Classification (IPC) or to both national classification and IPC

### B. FIELDS SEARCHED

Minimum documentation searched (classification system followed by classification symbols)

B32B1/00-43/00; B29C70/00-70/88; B64C1/00; B64G1/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 11-320724 A (SHOWA AIRCRAFT INDUSTRY CO., LTD.) 24 November 1999 (1999-11-24) claims, paragraphs [0002], [0016], [0025], [0026] | 1-9, 11, 15-20 |
| Y | | 10, 12-14 |
| Y | JP 9-192987 A (SHOWA AIRCRAFT INDUSTRY CO., LTD.) 29 July 1997 (1997-07-29) claims, paragraphs [0001], [0006] | 10 |
| Y | WO 2014/162873 A1 (TORAY INDUSTRIES, INC.) 09 October 2014 (2014-10-09) paragraphs [0023], [0084], [0096], [0098], fig. 1, examples 10, 11 | 12-14 |
| A | JP 2002-11812 A (MITSUBISHI HEAVY INDUSTRIES, LTD.) 15 January 2002 (2002-01-15) entire text, all drawings | 1-20 |

☐ Further documents are listed in the continuation of Box C.    ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **16 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2023/008190**

| Patent document cited in search report | | | Publication date (day/month/year) | Patent family member(s) | | | Publication date (day/month/year) |
|---|---|---|---|---|---|---|---|
| JP | 11-320724 | A | 24 November 1999 | (Family: none) | | | |
| JP | 9-192987 | A | 29 July 1997 | (Family: none) | | | |
| WO | 2014/162873 | A1 | 09 October 2014 | US | 2016/0303824 | A1 | |
| | | | | paragraphs [0060, [0136], [0152], [0154], examples 10, 11 | | | |
| | | | | EP | 2982504 | A1 | |
| | | | | CN | 105073403 | A | |
| | | | | TW | 201444678 | A | |
| JP | 2002-11812 | A | 15 January 2002 | US | 2002/0012767 | A1 | |
| | | | | claims, figures | | | |
| | | | | EP | 1167020 | A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6804340 B

- JP 6549982 B

**Non-patent literature cited in the description**

- Flammability Requirements for Aircraft Seat Cushions. Federal Aviation Administration